# EUROPEAN PATENT APPLICATION

(11) **EP 4 834 677 A1**
(43) Date of publication of application: **04.11.2026**
(21) Application number: 25173355.6
(22) Date of filing: 29.04.2025
(51) Int. Cl.: B60T 7/20, B60T 8/17, B60T 8/32, B60T 8/88, B60T 13/66, B60T 13/68, B60T 17/04, B60T 17/22, B60T 13/26, B60T 7/12

(54) **ELECTRO-PNEUMATIC BRAKING DEVICE WITH REDUNDANTLY CONTROLLED TRAILER CONTROL MODULE**

(71) Applicant: KB Intellectual Property GmbH & Co. KG, 82049 Pullach (DE)
(72) Inventor: JUNDT, Oliver, 74394 Hessigheim (DE); MICHALSKI, Max, 85579 Neubiberg (DE); WIEDER, Gerhard, 74354 Besigheim (DE); BOHLEY, Martin, 71739 Oberriexingen (DE)

(57) **Abstract**

The invention refers to an electro-pneumatic braking device (100) of a towing vehicle designed for coupling at least one trailer, which comprises at least the following: a trailer control module (eTPCM), which can be controlled primarily electrically by a primary electronic control unit (pECU) and secondarily pneumatically by at least one pneumatic trailer control pressure (pAnh1, pAnh2) applied to at least one control connection (12, 15), wherein the trailer control module (eTPCM) is designed to actuate a trailer brake pressure (pA) at an output connection as a function of the at least one trailer control pressure (pAnh1, pAnh2) applied to the at least one control connection (12, 15), wherein one of the at least one trailer control pressure (pAnh1) for the trailer control module (eTPCM) is based on a parking brake pressure (PB) which is assigned to a parking brake circuit, wherein the parking brake circuit comprises a parking brake module (EPB) generating the parking brake pressure (PB) and controlled by an electronic parking brake control unit (EPB-ECU), and passive spring brake cylinders (2) controlled by the parking brake pressure (PB), and an inverting device (IV) is provided, which is designed to invert the parking brake pressure (PB) into an inverted parking brake pressure (PBi). The inverting device (IV) is arranged and designed to generate the one of at least one trailer control pressure (pAnh1) for the trailer control module (eTPCM) on the basis of the inverted parking brake pressure (PBi).

## Description

The present invention relates to an electro-pneumatic braking device of a towing vehicle designed for coupling at least one trailer according to the preamble of claim 1 and to a towing vehicle designed for coupling at least one trailer according to the preamble of claim 26.

Vehicles with highly automated driving functions, which relieve the driver of the driving task and responsibility at least for a limited period of time, must continue to drive the vehicle in the event of any error until the driver takes over responsibility again. The "fail-safe" system property derived from this requires that basic functions such as braking and steering continue to be guaranteed, at best without functional restrictions. This means, for example, that it must be possible to brake the vehicle and in particular a trailer coupled to the vehicle in the event of any fault.

A generic electro-pneumatic braking device is disclosed in EP 3 415 386 B1. There, a parking brake module comprises a trailer output line for coupling to a trailer control module and a inversing valve in a trailer output line solely to enable pneumatic control of a pressure control module, which is provided for braking a first wheel set on a front axle of the towing vehicle. This makes it possible to pneumatically control the trailer control module and the pressure control module in a redundant case.

The object of the present invention is to further develop an electro-pneumatic braking device in such a way that the control of the trailer brakes is more flexible in a redundant case. Furthermore, a towing vehicle designed for coupling at least one trailer with such an electro-pneumatic braking device is also to be provided.

This problem is solved by the features of claims 1 and 26.

Advantageous embodiments and further embodiments of the invention result from the features of the dependent claims.

### Disclosure of the invention

In a so-called European trailer control systems, the trailer must be braked in accordance with the spring brake cylinders of the towing vehicle when the towing vehicle/trailer combination is parked. If the spring brake cylinders are compressed by deaeration, the trailer should be braked at the same time via the service brakes, which requires the control of the trailer brake pressure. For this purpose, the trailer control module preferably has an internal, inverse relay valve that controls an internal inversion of the parking brake pressure as trailer brake pressure. This is necessary because the spring brake cylinders are passive brake cylinders that release when deaerated and apply when vented. This means that the parking brake pressure generated in the parking brake circuit of the towing vehicle to control the spring-loaded brakes can be used directly to control the service brakes of the trailer after the internal inversion in the trailer control module.

However, such control of the trailer brakes is not possible, for example, for a non-European trailer control system, e.g. for a US trailer control system, as a trailer control module designed for non-European trailer control systems does not provide an internal inversion of the trailer control pressure.

The invention is therefore based on the idea of modifying the electro-pneumatic braking device so that it is suitable for non-European trailer control.

Accordingly, in a first aspect, the invention discloses an electro-pneumatic braking device of a towing vehicle designed for coupling at least one trailer, which comprises at least the following:
a) a trailer control module which can be controlled primarily electrically by a primary electronic control system and secondarily pneumatically by at least one pneumatic trailer control pressure applied to at least one pneumatic control connection, wherein the trailer control module is designed to actuate a trailer brake pressure at an output connection as a function of the at least one trailer control pressure applied to the at least one control connection, wherein
b) one of the at least one trailer control pressure for the trailer control module is based on a parking brake pressure associated with a parking brake circuit, wherein the parking brake circuit comprises a parking brake module generating the parking brake pressure and controlled by an electronic parking brake controller, and passive spring brake cylinders controlled by the parking brake pressure, and
c) an inverting device is provided, which is designed and set up invert the parking brake pressure into an inverted parking brake pressure, wherein
d) the inverting device is arranged and designed to generate the one of the at least one trailer control pressure for the trailer control module on the basis of the inverted parking brake pressure.

The inverting device is preferably designed to generate and output at least one trailer control pressure which is inversely proportional in relation to the parking brake pressure. Alternatively, the inverting device can be designed to generate and output at least one inversely proportional trailer control pressure in relation to a parking brake control pressure by which the parking brake module is pneumatically controlled. For this purpose, the inverting device is preferably connected to a compressed air supply in order to be supplied with compressed air from the supply pressure prevailing therein, which then enables a low parking brake pressure to be inverted into a higher trailer brake pressure.

The parking brake module can be a separate unit or at least partially integrated into another module that performs other functions in addition to the parking brake functions, such as an air treatment function.

The invention has the advantage that it enables redundant control of the trailer control module, in particular only in a redundant case by the parking brake module, if the trailer control module is designed without internal inversion of the trailer control pressure. Preferably, the trailer control module is therefore designed to generate the trailer brake pressure without internal inversion of the at least one trailer control pressure. Consequently, the parking brake module is preferably controlled by the electronic parking brake control in such a way that the one of the at least one trailer control pressure is generated in particular only in a redundant case by inverting the parking brake pressure by means of the inverting device, this takes place in particular only when the towing vehicle is moving, i.e. in driving situations deviating from a standstill of the towing vehicle, as part of an auxiliary braking function.

The parking brake module or the electronic parking brake control therefore in the normal case only performs parking brake control functions such as applying/releasing the parking brake, trailer test etc. depending on a parking brake actuation signal. This is preferably done by deaeration or venting a trailer supply line drawn from the parking brake module to a coupling head "supply", as will be explained later.

In at least one redundant case, the parking brake module or the electronic parking brake control therefore also performs a service braking function as an auxiliary braking function, because at least the trailer control module can be pneumatically controlled redundantly with the aid of the parking brake pressure, thereby also enabling service braking or auxiliary braking with, for example, parking brake pressure modulated by the parking brake module. The parking brake module can therefore be designed to be controlled by the electronic parking brake controller (directly or indirectly) so that it generates a modulated parking brake pressure. This increases flexibility with regard to the one of the at least one trailer control pressure that pneumatically controls the trailer control module. Therefore, the parking brake module or the electronic parking brake control provides an auxiliary braking function, at least for the trailer brakes and the brakes of the towing vehicle which are provided with spring brake cylinders, which can be used to brake the towing vehicle-trailer-combination in motion to a standstill in a controlled manner.

Preferably, the redundant case realized by the parking brake module or the electronic parking brake control forms a second redundant case, which is implemented subordinately in relation to a first redundant case, which will be described later.

An electro-pneumatic pressure control module and/or parking brake module and/or trailer control module can comprise an integrated control unit, which controls an inlet/outlet solenoid valve combination connected to a compressed air supply in accordance with a brake request fed into the local control unit. The trailer control module can also be designed without such an integrated control unit. The control pressure generated by the inlet/outlet solenoid valve combination on the basis of the supply pressure from the compressed air supply then controls a relay valve, which is also connected to the compressed air supply on the supply side and which then modulates a service brake pressure for a connected service brake cylinder or a parking brake pressure for a connected spring brake cylinder from the control pressure. An integrated pressure sensor measures the actual service brake pressure or the actual parking brake pressure and reports it to the integrated control unit or to an electronic control unit, which then adjusts the actual brake pressure to a target brake pressure that corresponds to the brake requirement in the sense of brake pressure control. Furthermore, a backup valve is also integrated in such a pressure control module and/or parking brake module and/or trailer control module as a solenoid valve, which closes when energized and prevents a backup or control pressure present at a backup connection, which originates in particular from a pneumatic channel of a foot brake valve, from being passed on to the relay valve. On the other hand, the backup valve opens in the event of a de-energization, which can be based on a defect in the integrated control unit, in the electronic control unit in the electrical power supply and/or in the activation by the service brake request signal or parking brake request signal, and then forwards the backup or control pressure to the relay valve, which then modulates the service brake pressure or the parking brake pressure depending on the backup or control pressure. The backup or control pressure then realizes a purely pneumatic redundancy. The pressure control module can be single-channel, i.e. designed to control the brake pressure on one wheel or axle, or multi-channel, i.e. designed to control the brake pressure on several wheels, for example on all wheels of one axle.

To increase flexibility, it can be further provided that the inverting device is arranged externally at least in relation to the trailer control module, in particular also externally in relation to the parking brake module.

To increase reliability, a control pressure generation device can be provided, which is designed and set up to generate at least one additional trailer control pressure for the trailer control module. The trailer control module can then be pneumatically controlled in several ways (redundantly).

A first maximum selection device can also be provided, for example a first select-high valve, which selects the greater trailer control pressure from the trailer control pressure and the at least one further trailer control pressure and forwards it to the at least one control connection of the trailer control module, in particular directly or indirectly.

The electro-pneumatic braking device can also comprise an electro-pneumatic service braking device with at least one service braking circuit, wherein the at least one service braking circuit contains the primary electronic control unit and at least one pressure control module which can be controlled primarily electrically and secondarily pneumatically, and pneumatic service brake cylinders, wherein
a) the primary electronic control is designed to perform the primary electrical control of the at least one pressure control module, and
b) the secondary pneumatic control takes place as a function of at least one redundancy control pressure in at least one redundant case if the primary control of the at least one pressure control module is prevented or has failed, and wherein
c) the primary electrical control and the secondary pneumatic control are dependent on an electrical service brake request signal.

In particular, a pressure control module is to be understood as a unit which regulates the actual service brake pressure controlled by it for at least one pneumatic service brake cylinder to a target brake pressure which is dependent on the service brake request signal.

In this case, the redundant control pressure generated by the secondary pneumatic control can relate to at least one redundant control pressure, which represents for example the first redundant case already mentioned above and which is primary in relation to the second redundant case realized by the parking brake pressure generated by the parking brake module.

It can also be provided that in a or in the redundant case, a redundant control pressure for the at least one pressure control module is generated depending on the parking brake pressure inverted by the inverting device. This creates the possibility of using the parking brake pressure to pneumatically control at least one pressure control module in addition to the trailer control module redundantly by means of the parking brake pressure. As spring-loaded brake cylinders are generally only arranged on a rear axle in a towing vehicle, the at least one pressure control module is preferably arranged on the front axle of the towing vehicle. This allows the spring brake cylinders on the rear axle and the service brake cylinders on the front axle to be applied as part of a service brake function in one or in the redundant case. Alternatively, spring brake cylinders can also be arranged on the front axle, which are then applied in one or in the redundant case as part of a service brake function. The parking brake module or the electronic parking brake control then provide an auxiliary brake function, not only for the trailer brakes, but also for the brakes on the front and rear axles of the towing vehicle.

In addition, the electro-pneumatic braking device can be designed so that
a) at least one first pressure control valve is provided, which is designed and controlled by an electronic controller in order to modulate the parking brake pressure inverted by the inverting device, on which the redundant control pressure for the at least one pressure control module is dependent, and/or
b) at least one second pressure control valve is provided, which is designed and controlled by an electronic controller to modulate the parking brake pressure, in particular to reduce it, before the parking brake pressure is inverted by the inverting device.

This modulation of the parking brake pressure can include, for example, alternately holding and lowering the parking brake pressure. The first and/or the second and/or a third pressure control valve to be described later can be designed as an ABS pressure control valve.

The case b) described above, in which a second pressure control valve is provided, which is designed and controlled by an electronic controller to modulate the parking brake pressure, in particular to reduce it, before the parking brake pressure is inverted by the inverting device, opens up the possibility of reducing the parking brake pressure controlled from the parking brake module in order to generate a relatively high trailer control pressure as a result of the inverting device, in particular of the proportional inversion. This further increases flexibility.

The electronic controller the at least one first pressure control valve and/or the at least one second pressure control valve may comprise the following:
a) a secondary electronic control of the electro-pneumatic braking device, which is a redundant electronic control with respect to the primary electronic control, and/or
b) the electronic parking brake control of the parking brake module, and/or
c) an Automated Driving ECU in which autonomous driving functions are implemented, and/or
d) a separate electronic control unit being different from the Automated Driving ECU, the secondary electronic control unit and the primary electronic control unit.

Preferably, the secondary electronic control unit, the electronic parking brake control unit and/or the automated driving ECU is (are) supplied with electrical energy from a second electrical energy source, which is independent of a first electrical energy source that supplies the primary electronic control unit with electrical energy.

The parking brake module can also be designed and controlled by the electronic parking brake controller in order to generate the parking brake pressure for the spring brake cylinders of the parking brake circuit,
a) in the normal case dependent on a parking brake request signal, and
b) in the or a redundant case, depending on the brake request signal, which can comprise a or the service brake request signal and/or a parking brake request signal.

For this purpose, the parking brake module or the electronic parking brake control can be connected to a device which generates the brake request signal, in particular the service brake request signal, for example to an electrical brake value transmitter of a foot brake module and/or to the Automated Driving ECU, which generates the brake request signal autonomously, i.e. independently of the driver.

Preferably, the parking brake module or the electronic parking brake control is connected to a device that generates the (electrical) parking brake request signal, for example to a manually operated parking brake actuation device that generates particularly in the normal case the parking brake request signal depending on the actuation.

As mentioned above, the parking brake module or the electronic parking brake control normally only performs parking brake control functions such as parking brake application/release, trailer test, etc. depending on the parking brake actuation signal and, in the or a redundant case, additionally performs service brake or auxiliary brake functions, because the parking brake pressure is used to pneumatically control at least the trailer control module redundantly, thereby also enabling service braking or auxiliary braking with parking brake pressure particularly modulated by the parking brake module. As the parking brake module is supplied with compressed air from a compressed air supply, this modulation can mean pulsed and/or periodic pressure holding, pressure lowering or pressure increases up to the supply pressure in the compressed air supply.

Therefore, the electro-pneumatic braking device can comprise a foot brake pedal and with at least one brake valve, wherein the foot brake module is designed to generate by a brake valve depending on an actuation of the foot brake pedal
a) at least one further trailer control pressure, and/or
b) the one of the at least one redundant control pressure for the pneumatic control of the at least one pressure control module.

As indicated above, the electrical service brake request signal can be
a) generated in an electrical channel of the foot brake module depending on an actuation of the foot brake pedal, and/or
b) generated by the or an Automated Driving ECU independently of the driver, and/or
c) generated in the or in a separate electronic control unit being different from the Automated Driving ECU, the secondary electronic control unit and the primary electronic control unit.

A second maximum selection device can also be provided in the electro-pneumatic braking device, which, under the at least one redundant control pressure and the inverted parking brake pressure, forwards the greater control pressure to the at least one pressure control module in order to pneumatically control the at least one pressure control module.

An electrically or electronically controllable solenoid valve device can also be arranged and designed in the electro-pneumatic braking device in order to load at least one control piston of the brake valve of the foot brake module with a control piston pressure as a function of the electrical or electronic control, where
a) the at least one trailer control pressure, and/or
b) at least one redundancy control pressure is generated, depending on that control piston pressure.

Further, the solenoid valve device is electrically or electronically controlled by an electronic control unit, which in particular comprises the secondary electronic control unit. The solenoid valve device is controlled electrically or electronically by the secondary electronic control unit, in particular only in a or in the redundant case. This also increases the reliability of the electro-pneumatic braking device.

In the electro-pneumatic braking device, at least one third pressure control valve can also be arranged in
a) at least one brake pressure line between the at least one pressure control module and the pneumatic service brake cylinders, where the least one third pressure control valve is designed and controlled to modulate a service brake pressure issued by the at least one pressure control module, and/or
b) in at least one control pressure line, which leads a redundant pressure to the at least one pressure control module, where the least one third pressure control valve is designed and controlled to modulate the redundant pressure in the at least one control pressure line.

Preferably, the at least one third pressure control valve can be controlled by the primary electronic control and/or by the secondary electronic control. The at least one third pressure control valve can be designed and, in particular, controlled by the secondary electronic control system, in particular only in a or in the redundant case, in order to modulate a service brake pressure controlled by the at least one pressure control module. The third pressure control valve can also be designed as an ABS pressure control valve, as already mentioned above.

Preferably, in the electro-pneumatic service braking device of the electro-pneumatic braking device, a pressure control module assigned to a front axle of the vehicle can be a single-channel pressure control module and a pressure control module assigned to a rear axle of the vehicle can be a single-channel or dual-channel pressure control module.

In addition, at least one third pressure control valve can then be provided in the rear axle brake pressure lines between the pressure control module assigned to the rear axle of the towing vehicle and the service brake cylinders of the rear axle, which at least one third pressure control valve
a) is controlled in particular only by the primary electronic control unit in the normal case and in particular only by the secondary electronic control unit in the or in a redundant case, or which
b) is in normal case uncontrolled, i.e. does not change its switching state and is then in particular always switched to on open position, and is only controlled in a or in the redundant case and then only by the secondary electronic control.

The control of a pressure control valve should therefore mean a change in the switching state of the respective pressure control valve.

At least one third pressure control valve can also be arranged in the front axle brake pressure lines between the pressure control module assigned to the front axle of the towing vehicle and the service brake cylinders of the front axle, which at least one third pressure control valve is controlled
a) in the normal case in particular only by the primary electronic control unit, and
b) in a or in the redundant case, in particular only by the secondary electronic control unit.

In the electro-pneumatic braking device, the parking brake module can also be connected to a compressed air supply and designed to feed a trailer supply pressure into a trailer supply line which is connected to a "supply" coupling head.

The electronic parking brake control can then also be designed or controlled to control the parking brake module in such a way that the trailer supply line can be deaerated, in particular only when the towing vehicle is stationary. This design relates in particular to the above-mentioned trailer control systems outside Europe, for example in the US, in which the trailer supply line is deaerated in particular only when the towing vehicle or the towing vehicle/trailer combination is stationary in order to apply the spring brake cylinders of the trailer. As a result, an internal inversion of the trailer control pressure within the trailer control module can be dispensed with for the parking brake function, because the parking brake functions for the trailer are then realized in particular exclusively by venting or deaerating the trailer supply line.

Also, the parking brake module can be designed and controlled by the electronic parking brake control unit to generate the parking brake pressure for the spring brake cylinders of the parking brake circuit,
a) in the normal case dependent on a parking brake request signal, and
b) in the or in a redundant case, depending on the brake request signal of an automated driving or of a or of the separate electronic control unit, which request signal comprises a or the service brake request signal and/or a parking brake request signal.

Furthermore, the electro-pneumatic braking device can comprise a trailer brake pressure line connected on the one hand to the output connection of the trailer control module and on the other hand to a "Brake" coupling head in order to feed the trailer brake pressure into the "Brake" coupling head.

It may be provided that at least one fourth pressure control valve is arranged in the trailer brake pressure line, which is designed and controlled to modulate the trailer brake pressure. The at least one fourth pressure control valve can be controlled by the secondary electronic control system, in particular only in a or in the redundant case. This creates a further possibility for modulating the trailer brake pressure.

Also, the primary electronic control unit can be integrated together with the at least one pressure control module in a unit, particularly together with a pressure control module for the rear axle, which preferably is designed as a two-channel-module.

n a second aspect, the invention also relates to a towing vehicle designed for coupling at least one trailer, which comprises an electro-pneumatic braking device as described above.

Advantageous further embodiments of the invention are shown in the patent claims, the description and the drawings. The advantages of features and of combinations of several features mentioned in the introduction to the description are merely exemplary and can take effect alternatively or cumulatively, without the advantages necessarily having to be achieved by embodiments according to the invention. Further features can be found in the drawings - in particular the geometries shown and the relative dimensions of several components to one another as well as their relative arrangement and effective connection. The combination of features of different embodiments of the invention or of features of different patent claims is also possible, in deviation from the selected back relations of the patent claims, and is hereby suggested. This also applies to those features which are shown in separate drawings or mentioned in their description. These features can also be combined with features of different patent claims. Likewise, features listed in the patent claims may be omitted for further embodiments of the invention.

The invention will now be explained with reference to the accompanying drawing by means of embodiments. In the figures
- Fig. 1: shows a schematic representation of a part of an electro-pneumatic braking device according to a preferred basic embodiment of the invention;
- Fig. 2: showsa schematic representation of an expansion stage of the basic embodiment of Fig. 1;
- Fig. 3: shows a schematic representation of a further expansion stage of the basic embodiment of Fig. 1;
- Fig. 4a: shows a schematic representation of a further expansion stage of the basic embodiment of Fig. 1;
- Fig. 4b: shows a schematic representation of a further expansion stage of the basic embodiment of Fig. 1.

### Description of the embodiments

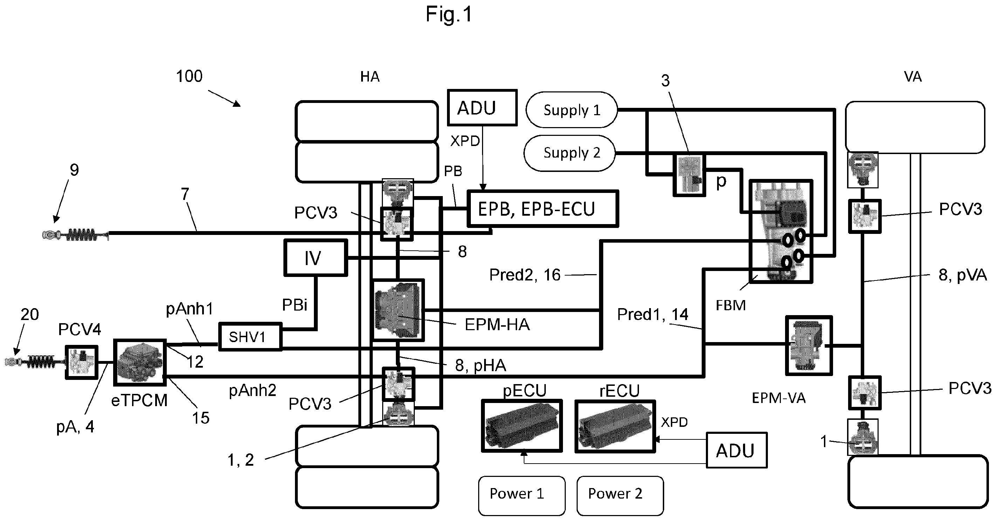

In **Fig. 1****,** an interconnection of components of an electro-pneumatic braking device 100 of a towing vehicle designed for coupling at least one trailer according to a preferred basic embodiment of the invention is shown schematically.

The towing vehicle has, for example, two axles, a front axle VA and a rear axle HA, whereby each wheel of the axles VA, HA is assigned a service brake cylinder 1 and, for example, each wheel of the rear axle HA is assigned combined service brake cylinders 1 and spring brake cylinders 2, so-called combination cylinders. Instead of only one rear axle HA, the towing vehicle can also have two rear axles HA1, HA2.

In addition to these brake cylinders 1, 2, the electro-pneumatic braking device 100 comprises, for example, a single-channel pressure control module EPM-VA on the front axle VA and here, for example, a dual-channel pressure control module EPM-HA on the rear axle HA.

The pressure control module EPM-VA on the front axle VA is supplied with compressed air from a first compressed air supply 1 via a supply line not shown here, and the pressure control module EPM-HA on the rear axle HA is supplied with compressed air from a second compressed air supply 2 via a supply line not shown here.

The electro-pneumatic pressure control modules EPM-VA and EPM-HA, a parking brake module EPM and a trailer control module eTPCM are designed here, for example, in an analog manner for each control channel and each comprise an integrated control unit, which controls an integrated inlet/outlet solenoid valve combination connected to a first or second compressed air supply Supply1 or Supply 2 in accordance with a brake request (service brake request or parking brake request) fed into an integrated control unit. The trailer control module eTPCM can also be designed without an integrated control unit, in which case the integrated inlet/outlet solenoid valve combination of the trailer control module eTPCM is controlled directly by the primary electronic control unit pECU.

The control pressure generated by the inlet/outlet solenoid valve combination on the basis of the supply pressure from the respective compressed air supply Supply 1 or Supply 2 then controls a relay valve also connected to a compressed air supply Supply 1 or Supply 2 on the supply side, which then modulates a service brake pressure pVA, pHA for the connected service brake cylinders 1 or a parking brake pressure PB for the connected spring brake cylinders 2 from the control pressure, or a trailer brake pressure pA for the trailer brakes. An integrated pressure sensor measures the actual service brake pressure or the actual parking brake pressure and reports it to the integrated control unit or to the primary electronic control unit pECU, which then adjusts the actual brake pressure to a target brake pressure that corresponds to the respective brake requirement in the sense of brake pressure control. Furthermore, a backup valve is also integrated in such a control module EPM-VA, EPM-HA, eTPCM or EPB as a solenoid valve, which closes when energized and prevents a backup or control pressure present at a backup connection from being forwarded to the relay valve. On the other hand, the backup valve opens in the event of de-energization, which is due to a defect in the integrated control unit, the primary electronic control unit pECU, the electrical power supply and/or in the actuation by the service brake request signal or parking brake request signal. It then forwards the backup or control pressure to the relay valve, which then modulates the service brake pressure pVA, pHA on the front axle VA and the rear axle HA, the trailer brake pressure pA or the parking brake pressure pB in the spring brake cylinders 2 depending on the backup or control pressure. A purely pneumatic redundancy is then realized by the backup or control pressure.

A third pressure control valve PCV3 is arranged in brake pressure lines 8 between wheel-side brake pressure connections of the pressure control modules EPM-VA and EPM-HA and the respective brake cylinders 1, 2, in each case designed in particular as an ABS pressure control valve, the two pressure control valves PCV3 on the front axle VA being electrically controllable by a primary electronic control unit pECU and a secondary electronic control unit rECU, and the third pressure control valves PCV3 on the rear axle HA being electrically controllable in particular exclusively by the secondary electronic control unit rECU. The third pressure control valves PCV3 on the front axle VA and on the rear axle HA can be used to modulate the service brake pressures pVA and pHA on the front and rear axles HA respectively.

The secondary electronic control unit rECU forms a subordinate and redundant electronic control unit in relation to the primary electronic control unit pECU, which in this example is an EBS control electronics unit. The primary electronic control unit pECU or EBS control unit controls the pressure control module EPM-VA on the front axle VA and the two third pressure control valves PCV3 on the front axle VA and the pressure control module EPM-HA on the rear axle HA in normal case or normal operation in a known manner depending on a service brake request signal. These pressure control modules EPM-VA and EPM-HA each can adjust the actual service brake pressure measured by the integrated pressure sensor to the target service brake pressure dependent on the service brake request signal in a known manner, i.e. in each case with the aid of control routines implemented in a respective integrated control unit. Since the two-channel pressure control module EPM-HA on the rear axle HA is able to carry out a wheel- or side-specific modulation of the service brake pressure pHA in each control channel, in particular ABS control, due to the integrated electronic control unit and the integrated inlet/outlet solenoid valve combinations, activation of the third pressure control valves PCV3 on the rear axle HA is not necessary in the normal case or during normal operation by the primary electronic control unit pECU and is therefore preferably not carried out during normal operation or in the normal case.

The primary electronic control unit pECU, the pressure control module EPM-VA on the front axle VA, the pressure control module EPM-HA on the rear axle HA, the third pressure control valves PCV3 on the front axle VA, a foot brake module FBM and the trailer control module ETPCM are supplied with electrical power by a first electrical power supply Power 1.

In contrast, the secondary electronic control unit rECU, the parking brake module EPB together with the associated electronic parking brake control unit EPB-ECU, a solenoid valve device 3, the third pressure control valves 9 on the rear axle HA and a fourth pressure control valve PCV 4 are supplied with electrical energy by a second electrical energy supply Power 2, which is independent of the first energy supply Power 1.

The electro-pneumatic braking device 100 therefore also comprises the trailer control module eTPCM, which in normal operation or in normal case or mode, like the pressure control modules EPM-VA and EPM-HA in particular, is primarily electrically controlled by the primary electronic control unit pECU and in at least one redundant case, pneumatically controlled by at least one trailer control pressure pAnh, in the embodiment of **Fig. 1****,** for example, by two trailer control pressures pAnh1 and pAnh2. As part of trailer brake pressure control, the integrated control unit then regulates the trailer brake pressure pA fed into a trailer brake pressure line 4 to a target trailer brake pressure that is dependent on the service brake request signal. The trailer brake pressure line 4 is connected to a coupling head "Brake" 20, via which the trailer brake pressure pAnh is then transmitted to the trailer brakes. A fourth pressure control valve PCV4 is also arranged in the trailer brake pressure line 4 leading from the trailer control module eTPCM to the coupling head "Brake" 20, which can be controlled by the secondary electronic control unit rECU in order to modulate the trailer brake pressure pA. The fourth pressure control valve PCV4 can also be designed as an ABS pressure control valve. Furthermore, the trailer control module eTPCM is connected on the supply side to one of the first and second air supplies Supply 1 or Supply2, for example.

The parking brake module EPB is controlled by an electronic parking brake control unit EPB-ECU, which is preferably integrated into the parking brake module EPM and then forms, for example, the above-mentioned integrated control unit of the parking brake module EPB.

The parking brake module EPM is also connected to a compressed air supply Supply 1 or Supply 2 and, as a result of control by the electronic parking brake control unit EPB-ECU, is designed to feed a trailer supply pressure into a trailer supply line 7 connected to the parking brake module EPM, which is connected to a coupling head "Supply" 9. The electronic parking brake control EPB-ECU can be designed or controlled to bleed the trailer supply line 7, in particular only when the towing vehicle is stationary. As already mentioned above, this design relates to trailer control outside Europe, for example in the USA, in which the trailer supply line 7 is vented in particular only when the towing vehicle or the towing vehicle/trailer combination is stationary in order to apply the trailer brakes. As a result, an internal inversion of the trailer control pressure pAnh1 or pAnh2 within the trailer control module eTPCM is dispensed with here for the parking brake function, because the parking brake functions "parking" and "driving" for the trailer are then realized in particular exclusively by deaerating or venting the trailer supply line 7.

In addition, the parking brake module EPM is connected to a parking brake actuator not shown here, which can be actuated manually and generates the parking brake request signal depending on the actuation, from which the integrated electronic parking brake control EPB-ECU then controls the integrated solenoid valves in order to actuate the spring brake cylinders 2 of the combination cylinders on the rear axle HA. The familiar parking brake functions such as "Park", "Drive", "Test Function" etc. are possible. In addition to the parking brake request signal, the electronic parking brake control unit EPM-ECU can also receive the service brake request signal and process this in order to generate a parking brake pressure PB dependent on the service brake request signal.

For the pneumatic control, which is subordinate to the electrical control by the primary electronic control unit pECU, the trailer control module eTPCM is connected with a first pneumatic control connection 12, for example, to an output of a first maximum selection device SHV1, which is designed, for example, as a select-high valve and controls the greater of the two control pressures present at its two input connections, namely the inverted park brake pressure PBi or a second redundant pressure Pred2 in a second control pressure line 16 as the first trailer control pressure pAnh1 to the first pneumatic control connection 12 of the trailer control mode eTPCM.

At a second pneumatic control connection 15, the trailer control module eTPCM is pneumatically controlled by a first redundant pressure Pred1, which is present in a first control pressure line 14, which is generated in a pneumatic first pneumatic channel, here for example a front axle channel of the foot brake module FBM. The second redundant pressure Pred2 is preferably generated in a pneumatic second pneumatic channel of the foot brake module FBM, which in connected to the second control pressure line 16.

The dual pneumatic control of the trailer control module eTPCM by the two trailer control pressures pAnh1 and pAnh2, for example, is subordinate to the primary electrical control by the primary electronic control unit pECU, which is dependent on the service brake request signal.

The pressure control module EPM-HA on the rear axle HA is also pneumatically controlled by the second redundant pressure Pred2, which is routed in the second control pressure line 16 and generated in the second pneumatic channel of the foot brake module FBM, in a subordinate manner to the primary electrical control by the primary electronic control unit pECU.

As described above, in the pressure control modules EPM-VA and EPM-Ha as well as in the trailer control module eTPCM, the integrated backup valve opens when the primary electrical control by the primary electronic control unit pECU has failed or is prevented or has a fault. The pneumatic control or redundant pressures Pred1, Pred2, pAnh1, pAnh2 are then applied to the integrated relay valves and control them pneumatically in order to actuate the respective brake pressure pVA, pHA, pA based on the respective supply pressure.

Furthermore, the electro-pneumatic braking device 100 comprises, for example, a foot brake module FBM as a brake value generating device, with an electrical channel with at least one electrical brake value transmitter such as a potentiometer and, for example, the two pneumatic channels, each of which comprises a mechanical service brake valve. Depending on the actuation of a foot brake pedal of the foot brake module FBM, an electrical service brake request signal is then generated in the electrical channel and the first redundant pressure Pred1, which controls the pressure control module EPM-VA on the front axle VA pneumatically redundantly via the first control pressure line 14, and in the second pneumatic channel the second redundant pressure Pred2, which controls the pressure control module EPM-HA on the rear axle HA pneumatically redundantly via the second control pressure line 16. The two pneumatic redundant pressures Pred1 and Pred2 therefore also represent the service braking requirement desired by the driver. For this purpose, the first pneumatic channel of the foot brake module FBM is therefore connected to the first control pressure line 14 and the second pneumatic channel to the second control pressure line 16.

Instead of or in addition to the foot brake module FBM, an Automated-Driving-ECU ADU for at least semi-autonomous driving can be provided as a brake value generating device which generates the service brake request signal.

The electro-pneumatic braking device 100 also comprises the solenoid valve device 3, which is controlled here by the secondary electronic control unit rECU and is designed to load at least one control piston of the brake valve of the foot brake module FBM with a control piston pressure p as a function of this electrical control, on which the two redundant pressures Pred1 and Pred2 are then generated as a function. The control piston pressure p therefore imitates a mechanical actuation of the service brake valve(s) of the foot brake module FBM and thus opens up a driver-independent possibility of generating the two redundant pressures Pred1 and Pred2 for the subordinate pneumatic control of the service brake circuits. The solenoid valve device 3 is therefore only controlled electrically by the secondary electronic control unit rECU preferably, particularly in a redundant case. For this purpose, the solenoid valve device 3 is supplied with compressed air, for example, from the first compressed air supply Supply 1 and comprises solenoid valves that allow the supply pressure to be modulated in order to generate a modulated control piston pressure p depending on the electrical control by the secondary electronic control unit rECU, from which a similarly modulated first and second redundant pressure Pred1 and Pred2 can then be generated in the respective pneumatic channels of the foot brake module FBM.

As mentioned above, a first input connection of the first maximum selection device SHV1 is connected to the second control pressure line 16, which carries the second redundant pressure Pred2. A second input connection of the first maximum selection device SHV1 is connected to an output of an inverting device IV, which inverts the input pressure present at its input. The inverting device IV is preferably designed to generate and output an output pressure that is inversely proportional to the input pressure. So that a higher output pressure can be generated from a low input pressure, the inverting device IV is connected on the supply side to one of the two compressed air supplies Supply 1 or Supply 2. The input pressure of the inverting device IV is formed here by the parking brake pressure PB controlled by the parking brake module EPM, which the inverting device IV then inverts inversely proportionally into an inverted parking brake pressure PBi and then forwards this to the second input connection of the first maximum selection device SHV1, which then forwards the greater of the two pressures from the inverted parking brake pressure PBi or the second redundant pressure Pred 2 to its output and thus to the first control connection 12 as the first trailer control pressure pAnh1.

Furthermore, the electropneumatic braking device comprises the Automated- Driving-ECU ADU , preferably separate from the primary electronic control unit rECU and the secondary electronic control unit rECU, which can generate a service brake request signal or a parking brake request signal as brake request signals XPD independently of the driver, depending on the respective driving situation (driving state or standstill). Autonomous driving functions are implemented in the Automated-Driving-ECU ADU, which can control or regulate components of the electropneumatic braking device 100 independently of the driver, in particular depending on sensor signals from an environment sensor system.

### Normal operation

In normal operation or in the normal case, a service brake request signal can be generated in the electrical channel of the foot brake module FBM as described above and a parking brake signal can be generated by the parking brake control EPB-ECU. Alternatively or additionally, the Automated-Driving-ECU ADU can also generate the brake request signal XPD as a service brake request signal independently of the driver. In this case, for example, the brake request signal XPD is fed into the primary electronic control unit pECU and the secondary electronic control unit rECU as a service brake request signal in order to control the service brake circuits electro-pneumatically. When the towing vehicle/trailer combination has come to a standstill, the Automated-Driving-ECU ADU can also generate the brake request signal XPD as a parking brake request signal, which is then fed into the electronic parking brake control unit EPB-ECU to hold the towing vehicle/trailer combination in the braked state (standstill).

In normal operation or in the normal case, however, the brake request signal XPD is preferably only processed as a service brake request signal by the primary electronic control unit pECU, but not by the secondary electronic control unit in order to execute a service brake application.

In normal operation or in the normal case, the primary electronic control unit pECU then controls the service brake cylinders 1 on the basis of the service brake request signal, taking into account higher functions such as axle load distribution, differential slip control, coupling force control, etc. The integrated electronic control units of the pressure control modules EPM-VA, EPM-HA on the front axle VA and on the rear axle HA as well as of the trailer control module eTPCM, for example, feed axle- and vehicle-specific brake request signals into electrical control connections of the pressure control modules EPM-VA, EPM-HA on the front axle VA and on the rear axle HA as well as of the trailer control module eTPCM in order to realize the primary electrical control of an electropneumatic service braking device of the braking device 100. The respectively integrated electronic control units of the pressure control module EPM-VA, EPM-HA and the trailer control module eTPCM then energize or de-energize the respectively integrated inlet/outlet valve combinations in order to pneumatically control the likewise respectively integrated relay valves, which then generate the service brake pressures pVA, pHA for the front axle VA and the rear axle HA as well as the trailer brake pressure pA based on the respective supply pressure. These brake pressures pVA, pHA are measured by the respective integrated pressure sensor as actual brake pressures and compared in each case in the integrated electronic control unit with the respective target pressure, which is specified by the individual electrical brake request signal controlled by the primary electronic control unit pECU, in order to realize brake pressure control in the pressure control modules EPM-VA, EPM-HA and in the trailer control module eTPCM.

In the event that the trailer control module eTPCM does not have an integrated electronic control unit, the electrical control of the integrated inlet/oulet valve combination can also be carried out directly by the primary electronic control unit pECU, which then also receives the actual trailer brake pressure pA from the integrated pressure sensor in order to carry out the trailer brake pressure control, for which purpose the primary electronic control unit pECU is then equipped with corresponding control routines.

Brake slip and/or traction slip and/or driving dynamics control routines are also implemented in the primary electronic control unit pECU, for example, which are (also) based on wheel speed signals from wheel speed sensors arranged on the wheels. A driving stability control system is also implemented there, for example, which also takes into account the steering angle, the yaw rate and the (lateral) acceleration of the towing vehicle. If the primary electronic control unit pECU is working correctly or is intact, these functions can therefore also run without errors. Since the pressure control module EPM-VA on the front axle VA is preferably a single-channel pressure control module, it initially controls a uniform service brake pressure pVA for both wheels of this front axle VA, which can then be modulated wheel by wheel or side by side by the two third pressure control valves PCV3, for example in an ABS or ESP case. In contrast, the third pressure control valves PCV3 on the rear axle HA are not actuated by the primary electronic control unit pECU during normal operation, as the inlet and outlet solenoid valve combinations of the two-channel pressure control module EPM-HA arranged there already allow wheel or side-by-side brake pressure modulation.

The primary electrical control of the electropneumatic service braking device of the electropneumatic braking device 100 by the primary electronic control unit pECU therefore comprises an electrical front axle braking circuit, an electrical rear axle braking circuit and an electrical trailer braking circuit, each as electrical service braking circuits.

For example, the primary electronic control unit pECU is designed for self-monitoring in order to send an error message to the secondary electronic control unit rECU, which can then take over control of the service brake circuits, in the event of a fault or failure that leads to the electrical control of the electrical service brake circuits being prevented. Such a fault or failure can be caused, for example, by a failure or fault of the integrated control unit in one of the pressure control modules EPM-VA, EPM-HA or the trailer control module eTPCM or the first electrical power supply Power1 or also by a faulty or impossible transmission of the brake request signal to the primary electronic control unit pECU. Alternatively, the primary electronic control unit pECU can also be monitored externally by the secondary electronic control unit rECU.

### Pneumatic redundancy

In the event of a failure of the primary electrical control of the service brake circuits by the primary electronic control unit pECU, purely pneumatic redundancy as a redundant case provides an option for generating the two redundancy pressures Pred1 and Pred2 in the two pneumatic channels of the foot brake module FBM by actuating the foot brake pedal of the foot brake module FBM, which are then fed via the two control pressure lines 14, 16 into the pneumatic control connections of the two pressure control modules EPM-VA and EPM-HA, so that these generate the service brake pressures pVA and pHA on the front axle VA and on the rear axle HA as a function of this. Parallel to this, the first redundant pressure pRed1 forms the second trailer control pressure pAnh2 and the second redundant pressure pRed2 forms the first trailer control pressure pAnh1 if no or a smaller inverted parking brake pressure PBi is present at the relevant input of the first maximum selection device SHV1. The trailer control module eTPCM as well as the two pressure control modules EPM-VA and EPM-HA are then controlled purely pneumatically, whereby the two redundant pressures pRed1, pRed2 then pneumatically control the integrated relay valves in these modules due to the de-energization of the integrated backup valve.

However, this purely pneumatic control of the service brake circuits depends on the attention, integrity or presence of the driver. On the other hand, it does not offer any electrical modulation of the service brake pressures pVA, pHA and pA, as would be necessary for a vehicle dynamics control system, for example.

The electro-pneumatic redundancy options listed below enable driver-independent control(s) and/or control(s) of the service brake circuits comprising at least one driving dynamics control by the secondary electronic control unit rECU and/or by the Automated-Driving-ECU ADU control unit.

### First electro-pneumatic redundancy

If the primary electrical control of the service brake circuits by the primary electronic control unit pECU has failed, the service brake circuits can still be controlled via the secondary electronic control unit rECU including dynamic driving control options such as ABS, ESP or ASR and thus associated with wheel or side-by-side brake pressure control. This option therefore represents a redundant case.

For this purpose, as already explained above, the secondary electronic control unit rECU is supplied with the wheel speed signals from the wheel speed sensors and with the signals from inertial sensors such as the yaw rate sensor, lateral and longitudinal acceleration sensor and steering wheel angle sensor. Furthermore, the driving dynamics control routines are also implemented in the secondary electronic control unit rECU, preferably without degradation compared to the driving dynamics control routines in the primary electronic control unit pECU.

It is assumed here that the brake request signal XPD is generated independently of the driver by the Automated-Driving-ECU ADU, which is separate from the primary electronic control unit rECU and the secondary electronic control unit rECU.

The Automated-Driving-ECU ADU therefore feeds the brake request signal XPD into both the primary electronic control unit pECU and the secondary electronic control unit rECU , whereby the primary electronic control unit pECU can no longer process the brake request signal due to the fault, but the secondary electronic control unit rECU is still able to do so.

The secondary electronic control unit rECU then controls the solenoid valve device 3 depending on the service brake request signal in order to generate the control piston pressure p for the at least one control piston of the service brake valve of the foot brake module FBM, which then generates the two redundant pressures Pred1 and Pred2, which then pneumatically control the two pressure control modules EPM-VA, EPM-HA and the trailer control module eTPCM in the manner already described above in order to generate the service brake pressures pVA and pHA and the trailer brake pressure pA. The service brake pressures pVA and pHA on the front and rear axles can then be controlled individually for each wheel or side by means of the third pressure control valves PCV3, which can be controlled by the secondary electronic control unit rECU particularly in terms of the driving dynamics control functions. In addition, the fourth pressure control valve PCV4 in the trailer brake pressure line 4, which is also controlled by the secondary electronic control unit rECU, makes it possible to modulate the trailer brake pressure pA independently, in particular in terms of the driving dynamics control functions.

### Second electro-pneumatic redundancy

If the primary electrical control of the service brake circuits by means of the primary electronic control unit pECU and also the secondary first electro-pneumatic redundancy described above has failed, then at least the trailer brake circuit and the parking brake circuit can still be controlled via the parking brake module EPB supplied with electrical energy e.g. by the second electrical power supply Power 2 and the electronic parking brake control unit EPB-ECU preferably integrated there. As already described above, the electronic parking brake control EPB-ECU can receive and process the brake request signal XPD from the Automated-Driving-ECU ADU in order to apply at least the spring brake cylinders 2 on the rear axle HA of the towing vehicle and the trailer brakes in a controlled manner in the sense of an auxiliary brake function in order to brake the towing vehicle-trailer combination in motion to a standstill and to lock it at a standstill. Therefore, this also represents a redundant case.

As part of this auxiliary braking function, the parking brake module EPB is designed, for example, to generate a modulated parking brake pressure PB as a function of the brake request signal XPD, in particular as a function of the service brake signal it comprises, which then applies the spring brake cylinders 2 of the combination cylinders on the rear axle HA in a metered or dosed manner. As the spring brake cylinders 2 are known to apply when the parking brake pressure PB falls and release when the parking brake pressure PB rises, the parking brake pressure PB required for auxiliary braking must be low. The low parking brake pressure PB is fed in parallel into the inverting device IV, where it is inverted into a high inverted parking brake pressure PBi. If the driver does not react or does not react appropriately to the failure, and therefore no or only a low second redundancy pressure Pred2 can be generated in the second control pressure line 16, the higher inverted parking brake pressure PBi prevails at the first maximum selection device SHV1 and is then used as the first trailer control pressure pAnh1 for pneumatic control of the trailer control module eTPCM, which then generates the trailer brake pressure pA depending on the first trailer control pressure pAnh1 in order to also brake the trailer as part of the auxiliary braking function.

As already mentioned above, the trailer brake control system is designed outside Europe so that the trailer supply line 7 is deaerated in particular only when the towing vehicle or the towing vehicle/trailer combination is stationary in order to apply the trailer brakes. As a result, the parking brake module EPB deaerates the trailer supply line 7 in response to the brake request signal XPD, which forms a parking brake request signal when the vehicle is stationary, whereupon the trailer brakes are applied.

The embodiment in **Fig. 1** provides a basic embodiment as a basis for the expansion stages described below, so that the basic embodiment can be expanded with further components in the sense of a modular system in order to provide an extended range of functions for electro-pneumatic redundancies.

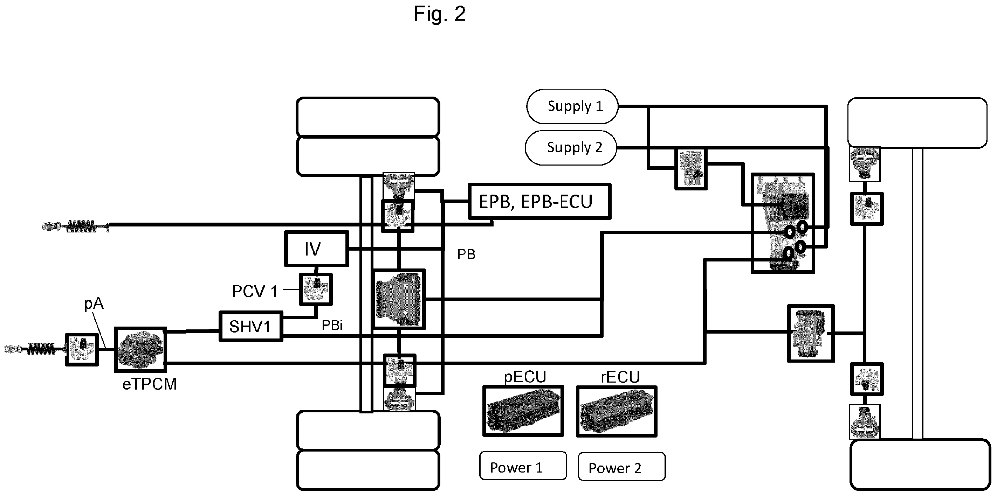

Further embodiments of the electropneumatic braking device 100, supplemented by additional components, are shown in Figures **2****,** **3****,** **4a** and **4b****.** In relation to **Fig. 1****,** identical and identically acting parts and components are marked with the same reference numbers.

In the embodiment of **Fig. 2****,** a first pressure control valve PCV1 is additionally arranged in the line between the output of the inverting device IV and the input of the first maximum selection device SHV1. This provides a means of modulating the inverted parking brake pressure PBi, in particular holding or lowering it in order to modulate the trailer brake pressure pA. The first pressure control valve PCV1 can be controlled, for example, by the secondary electronic control unit rECU, the electronic parking brake control unit EPB-ECU and/or by the Automated-Driving-ECU ADU as part of one or all of the electro-pneumatic redundancies described above in order to modulate the trailer brake pressure pA.

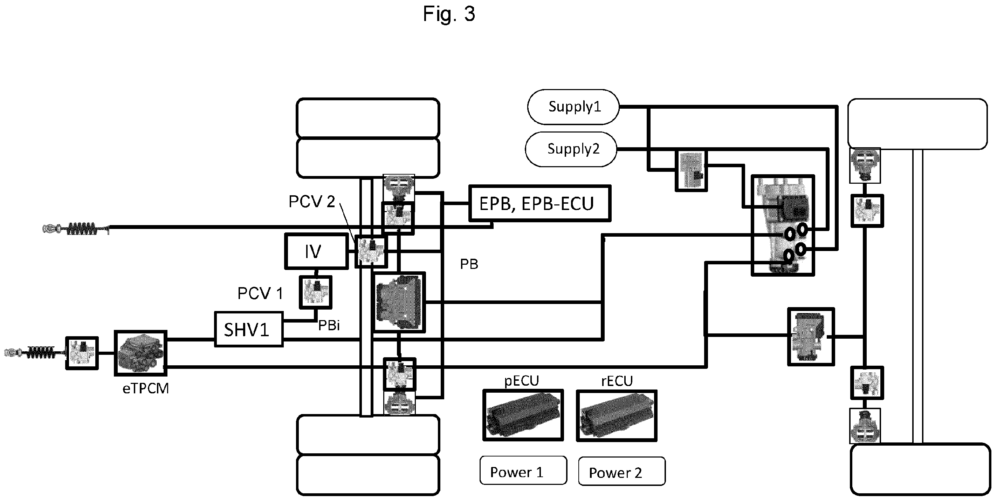

In the embodiment of **Fig. 3****,** compared to the embodiment of **Fig. 2****,** a second pressure control valve PCV2 is additionally arranged in the line between the parking brake module EPB and the inverting device IV, by means of which the parking brake pressure PB controlled by the parking brake module EPB can be modulated, in particular also as a function of a driving dynamics control.

The second pressure control valve PCV2 can be controlled, for example, by the secondary electronic control unit rECU, the electronic parking brake control unit EPB-ECU and/or by the Automated-Driving-ECU ADU as part of one or all of the electro-pneumatic redundancies described above in order to modulate the trailer brake pressure pA.

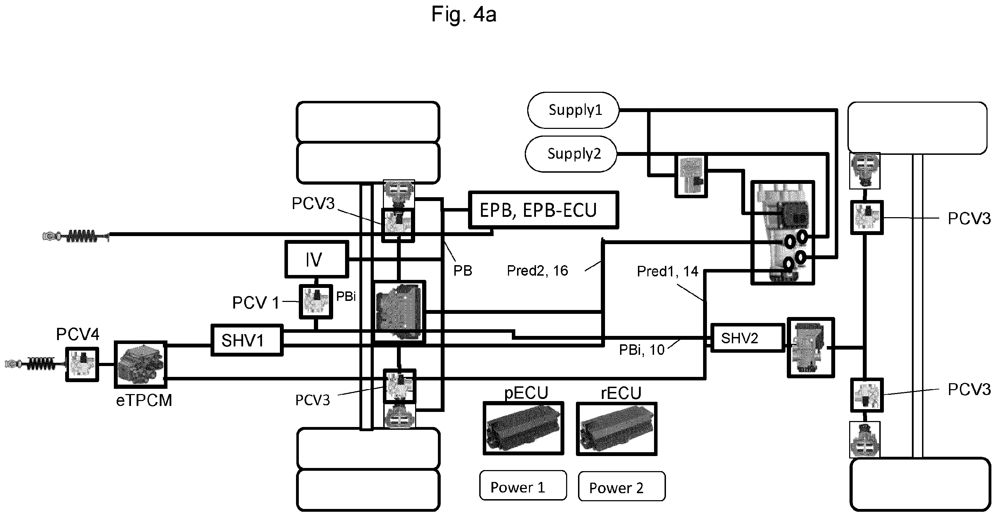

In the embodiment of **Fig. 4a****,** compared to the embodiment of **Fig. 2****,** a third control pressure line 10 is present, which in this case, for example, directs the inverted parking brake pressure PBi modulated by the first pressure control valve PCV1 to an input connection of a second maximum selection device SHV2, whose other input connection is connected to the first control pressure line 14 and is therefore under the first redundancy pressure Pred 1 . The output of the second maximum selection device SHV2 is connected to the pneumatic control input of the pressure control module EPM-VA of the front axle VA. As a result, in addition to the first redundant pressure Pred 1, the inverted parking brake pressure PBi can also be used as the control pressure for the pressure control module EPM-VA on the front axle VA, depending on which of the two pressures Pred 1 or PBi is the greater pressure.

This opens up the possibility of generating not only the trailer brake pressure pA and the parking brake pressure PB for the spring brake cylinders 2 on the rear axle HA as part of the auxiliary brake function in the electropneumatic redundancy of **Fig. 1****,** but also a service brake pressure pVA for the service brake cylinders 1 on the front axle VA, in order to brake the trailer and the towing vehicle on all axles when the vehicle is moving.

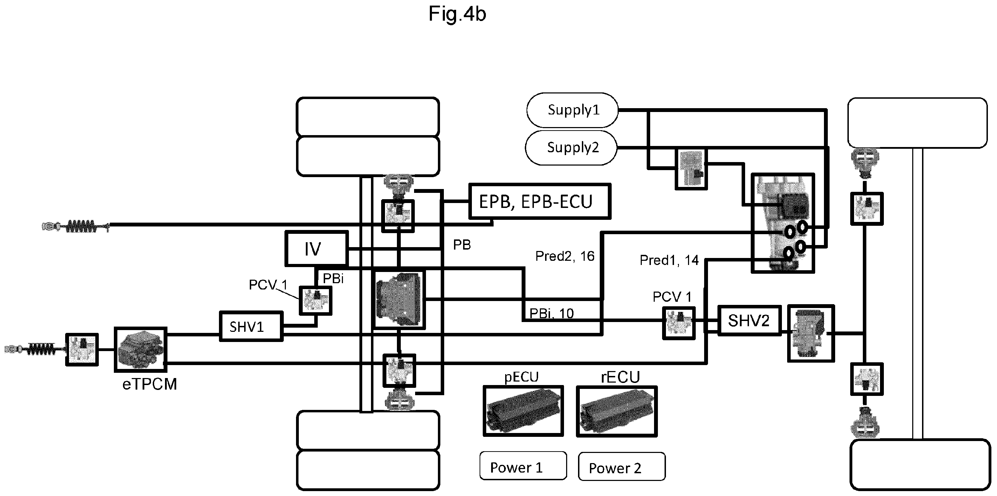

In the embodiment of **Fig. 4b****,** compared with the embodiment of **Fig. 4a****,** the third control pressure line 10 contains a further first pressure control valve PCV1, by means of which the inverted parking brake pressure PBi can be modulated, from which the control pressure for the pressure control module EPM-VA for the front axle can then be formed if it is greater than the first redundant pressure Pred1.

The further first pressure control valve PCV1 can be controlled, for example, by the secondary electronic control unit rECU, the electronic parking brake control unit EPB-ECU and/or by the Automated-Driving-ECU ADU as part of one or all of the electro-pneumatic redundancies described above in order to modulate the inverted parking brake pressure PBi.

This results in a range of electropneumatic control options and redundancies that are not limited to the embodiments described above.

### REFERENCE LIST

- 1: Service brake cylinder
- 2: Spring brake cylinder
- 3: Solenoid valve device
- 4: trailer brake pressure line
- 6: Second control pressure line
- 7: Trailer supply line
- 8: Brake pressure lines
- 9: Coupling head "Supply"
- 10: Third control pressure line
- 12: First pneumatic control connection
- 14: First control pressure line
- 15: Second pneumatic control connection
- 16: Second control pressure line
- 20: Coupling head "Brake"
- 100: Electropneumatic braking device
- FBM: Foot brake module
- Supply 1: First compressed air supply
- Supply 2: Second compressed air supply
- pECU: Primary electronic control unit
- rECU: Secondary electronic control unit
- Power 1: First electrical power supply
- Power 2: Second electrical power supply
- PB: Parking brake pressure
- PBi: Inverted parking brake pressure
- VA: Front axle
- HA: Rear axle
- eTPCM: Trailer control module
- EPB: Parking brake module
- EPB-ECU: Parking brake control
- SHV1: First maximum selection device
- SHV2: Second maximum selection device
- IV: Inverting device
- pA: Trailer brake pressure
- pVA: Service brake pressure front axle
- pHA: Service brake pressure rear axle
- pAnh1: first trailer control pressure
- pAnh2: second trailer control pressure
- Pred1: First redundant pressure
- Pred2: Second redundant pressure
- PCV1: First pressure control valve
- PCV2: Second pressure control valve
- PCV3: Third pressure control valves
- PCV4: Fourth pressure control valve
- p: Control piston pressure
- XPD: Brake request signal (includes a service brake signal and/or a parking brake request signal)
- ADU: Automated Driving ECU

## Claims

1. Electro-pneumatic braking device (100) of a towing vehicle designed for coupling at least one trailer, which comprises at least the following:
a) a trailer control module (eTPCM), which can be controlled primarily electrically by a primary electronic control unit (pECU) and secondarily pneumatically by at least one pneumatic trailer control pressure (pAnh1, pAnh2) applied to at least one control connection (12, 15), wherein the trailer control module (eTPCM) is designed to actuate a trailer brake pressure (pA) at an output connection as a function of the at least one trailer control pressure (pAnh1, pAnh2) applied to the at least one control connection (12, 15), wherein
b) one of the at least one trailer control pressure (pAnh1) for the trailer control module (eTPCM) is based on a parking brake pressure (PB) which is assigned to a parking brake circuit, wherein the parking brake circuit comprises a parking brake module (EPB) generating the parking brake pressure (PB) and controlled by an electronic parking brake control unit (EPB-ECU), and passive spring brake cylinders (2) controlled by the parking brake pressure (PB), and
c) an inverting device (IV) is provided, which is designed to invert the parking brake pressure (PB) into an inverted parking brake pressure (PBi), **characterized in that**
d) the inverting device (IV) is arranged and designed to generate the one of at least one trailer control pressure (pAnh1) for the trailer control module (eTPCM) on the basis of the inverted parking brake pressure (PBi).

2. Electro-pneumatic braking device (100) according to claim 1, **characterized in that**
a) the trailer control module (eTPCM) is designed such that it generates the trailer brake pressure (pA) without internal inversion of the at least one trailer control pressure (pAnh1, pAnh2), and that
b) the inverting device (IV) is arranged externally at least in relation to the trailer control module (eTPCM), in particular also externally in relation to the parking brake module (EPB).

3. Electro-pneumatic braking device (100) according to claim 1 or 2, **characterized in that** a control pressure generating device is provided, in particular a foot brake module (FBM), which is designed to generate at least one further trailer control pressure (pAnh2) for the trailer control module (eTPCM).

4. Electro-pneumatic braking device (100) according to claim 3, **characterized in that** a first maximum selection device (SHV1) is provided, which selects the greater trailer control pressure from the trailer control pressure (pAnh1) and the at least one further trailer control pressure (pAnh2) and forwards it to the at least one control connection (12, 15) of the trailer control module (eTPCM).

5. Electro-pneumatic braking device (100) according to one of the preceding claims, **characterized in that** it comprises an electro-pneumatic service braking device with at least one service braking circuit, wherein the at least one service braking circuit includes at least the primary electronic control unit (pECU) and at least one pressure control module (EPM-VA, EPM-HA), which can be controlled primarily electrically and secondarily pneumatically, and pneumatic service brake cylinders (1), wherein
a) the primary electronic control unit (pECU) is designed to perform the primary electrical control of the at least one pressure control module (EPM-VA, EPM-HA), and
b) the secondary pneumatic control of the at least one pressure control module (EPM-VA, EPM-HA) takes place as a function of at least one redundant control pressure (Pred1, Pred2) in at least one redundant case if the primary electrical control of the at least one pressure control module (EPM-VA, EPM-HA) by the primary electronic control unit (pECU) is prevented or has failed, wherein
c) the primary electrical control and the secondary pneumatic control of the at least one pressure control module (EPM-VA, EPM-HA) is dependent on a service brake request signal.

6. Electro-pneumatic braking device (100) according to claim 5, **characterized in that** in a or in the at least one redundant case, the at least one redundant control pressure (Pred1, Pred2) for the at least one pressure control module (EPM-VA, EPM-HA) is generated as a function of the parking brake pressure (PBi) inverted by the inverting device (IV).

7. Electro-pneumatic braking device (100) according to one of the preceding claims, **characterized in that**
a) at least one first pressure control valve (PCV1) is provided, which is designed and controlled by at least one electronic control unit (ADU, EPB-ECU, rECU) in order to modulate the inverted parking brake pressure (PBi), on which the at least one redundant control pressure (Pred1, Pred2) for the at least one pressure control module (EPM-VA, EPM-HA) and/or the at least one trailer control pressure (pAnh1, pAnh2) for the trailer control module (eTPCM) is dependent, and/or
b) at least one second pressure control valve (PCV2) is provided, which is designed and controlled by at least one electronic control unit (ADU, EPB-ECU, rECU) to modulate the parking brake pressure (PB), in particular to lower it, before the parking brake pressure (PB) is inverted by the inverting device (IV) to the inverted parking brake pressure (PBi).

8. The electro-pneumatic braking device (100) according to claim 7, **characterized in that** the electronic control unit controlling the at least one first pressure control valve (PCV1) and/or the at least one second pressure control valve (PCV2) comprises the following:
a) a secondary electronic control unit (rECU) of the electro-pneumatic braking device, which is a redundant electronic control unit with respect to the primary electronic control unit (pECU), and/or
b) the electronic parking brake control unit (EPB-ECU) of the parking brake module (EPM), and/or
c) an Automated Driving ECU (ADU) in which autonomous driving functions are implemented, and/or
d) a separate electronic control unit being different from the Automated Driving ECU (ADU), the secondary electronic control unit (rECU) and the primary electronic control unit (pECU).

9. Electro-pneumatic braking device (100) according to one of claims 5 to 8, **characterized in that** it comprises a foot brake module (FBM) with a foot brake pedal and with at least one brake valve, wherein the foot brake module (FBM) is designed to generate by a brake valve depending on an actuation of the foot brake pedal
a) at least one further trailer control pressure (pAnh2), and/or
b) the one of the at least one redundant control pressure (Pred1, Pred2) for the pneumatic control of the at least one pressure control module (EPM-VA, EPM-HA).

10. Electro-pneumatic braking device (100) according to claim 9, **characterized in that** the service brake request signal is generated
a) in the foot brake module (FBM) depending on an actuation of the foot brake pedal, and/or
b) by the or an Automated Driving ECU (ADU) independently of the driver.

11. Electro-pneumatic braking device (100) according to claim 9 or 10, **characterized in that** a second maximum selection device (SHV2) is provided which, under the at least one redundant control pressure (Pred1) and the inverted parking brake pressure (PBi), forwards the greater control pressure to the at least one pressure control module (EPM-VA, EPM-HA) in order to pneumatically control the at least one pressure control module (EPM-VA, EPM-HA).

12. Electro-pneumatic braking device (100) according to one of claims 9 to 11, **characterized in that** an electrically controllable solenoid valve device (78) is arranged and designed in order to load at least one control piston of the brake valve of the foot brake module (FBM) with a control piston pressure (p) as a function of the electrical control, where
a) the at least one trailer control pressure (pAnh1, pAnh2), and/or
b) the at least one redundant control pressure (Pred1, Pred2) is generated depending on that control piston pressure (p).

13. Electro-pneumatic braking device (100) according to claim 12, **characterized in that** the solenoid valve device (78) is electrically controlled by an electronic control unit, which in particular comprises the secondary electronic control unit (rECU).

14. Electro-pneumatic braking device (100) according to one of claims 5 to 13, **characterized in that** at least one third pressure control valve (PCV3) is arranged
a) in at least one brake pressure line (8) between the at least one pressure control module (EPM-VA, EPM-HA) and the pneumatic service brake cylinders (1), where the least one third pressure control valve (PCV3) is designed and controlled to modulate a service brake pressure (pVA, pHA) issued by the at least one pressure control module (EPM-VA, EPM-HA), and/or
b) in at least one control pressure line (16, 14), which leads a redundant pressure (Pred1, Pred2) to the at least one pressure control module (EPM-VA, EPM-HA), where the least one third pressure control valve (PCV3) is designed and controlled to modulate the redundant pressure (pVA, pHA) in the at least one control pressure line (16, 14).

15. Electro-pneumatic braking device (100) according to claim 14, **characterized in that** the at least one third pressure control valve (PCV3) is controlled by the primary electronic control unit (pECU) and/or by the secondary electronic control unit (rECU).

16. Electro-pneumatic braking device (100) according to claim 14 or 15, **characterized in that** a pressure control module (EPM-VA) assigned to a front axle (VA) of the towing vehicle is a single-channel pressure control module and a pressure control module (EPM-HA) assigned to a rear axle (HA) of the towing vehicle is a single-channel or dual-channel pressure control module.

17. Electro-pneumatic braking device (100) according to claim 16, **characterized in that** third pressure control valves (PCV3) are arranged in rear axle brake pressure lines (8) between the pressure control module (EPM-HA) assigned to the rear axle (HA) of the towing vehicle and service brake cylinders (1) of the rear axle (HA), which third pressure control valves (PCV3)
a) are controlled in particular only by the primary electronic control unit (pECU) in the normal case and in particular only by the secondary electronic control unit (rECU) in the or a redundant case, or
b) is normally uncontrolled and only controlled in the or a redundant case and then only by the secondary electronic control unit (rECU).

18. Electro-pneumatic braking device (100) according to claim 16 or 17, **characterized in that** at least one third pressure control valve (PCV3) is arranged in a front axle brake pressure line (8) between the pressure control module (EPM-VA) assigned to the front axle (HA) of the towing vehicle and service brake cylinders (1) of the front axle (VA), which at least one third pressure control valve (PCV3) is controlled
a) in the normal case in particular only by the primary electronic control unit (pECU), and
b) in the or a redundant case or in a test case, in particular only by the secondary electronic control unit (rECU).

19. Electro-pneumatic braking device (100) according to one of the preceding claims, **characterized in that** the parking brake module (EPB) is designed and controlled by the electronic parking brake control unit (EPB-ECU) to generate the parking brake pressure (PB) for the spring brake cylinders (2) of the parking brake circuit,
a) in the normal case dependent on a parking brake request signal, and
b) in the or in a redundant case, depending on the brake request signal (XPD) of an automated driving ECU (ADU) or of a or of the separate electronic control unit, which request signal (XPD) comprises a or the service brake request signal and/or a parking brake request signal.

20. Electro-pneumatic braking device (100) according to one of the preceding claims, **characterized in that** the parking brake module (EPB) is connected to at least one compressed air supply (Supply1, Supply2) and is designed to feed a trailer supply pressure (pAvorrat) into a trailer supply line (7) which is connected to a coupling head "supply" (9).

21. Electro-pneumatic braking device (100) according to claim 20, **characterized in that** the electronic parking brake control unit (EPB-ECU) is designed to control the parking brake module (EPB) in such a way that the trailer supply line (7) can be vented, in particular only when the towing vehicle is stationary.

22. Electro-pneumatic braking device (100) according to one of the preceding claims, **characterized in that** it comprises a trailer brake pressure line (4) connected on the one hand to the output connection of the trailer control module (eTPCM) and on the other hand to a coupling head "brake" (20) in order to control the trailer brake pressure (pA) into the coupling head "brake" (20).

23. Electro-pneumatic braking device (100) according to claim 22, **characterized in that** at least one fourth pressure control valve (PCV4) is arranged in the trailer brake pressure line (4), which is designed and controlled to modulate the trailer brake pressure (pA).

24. Electro-pneumatic braking device (100) according to claim 23, **characterized in that** the at least one fourth pressure control valve (PCV4) is controlled by the secondary electronic control unit (rECU), in particular only in a or the redundant case or only in a test case.

25. Electro-pneumatic braking device (100) according to one of the preceding claims, **characterized in that** the primary electronic control unit (pECU) is integrated together with the at least one pressure control module (EPM-VA, EPM-HA) in a unit, particularly together with a pressure control module (EPM-HA) for the rear axle (HA).

26. Towing vehicle designed for coupling at least one trailer, **characterized in that** it comprises an electro-pneumatic braking device (100) according to at least one of the preceding claims.
